# EUROPEAN PATENT SPECIFICATION

(11) **EP 4 586 731 B1**
(45) Date of publication and mention of the grant of the patent: **26.08.2026**
(21) Application number: 25150194.6
(22) Date of filing: 03.01.2025
(51) Int. Cl.: H04W 74/0816, H04W 84/12

(54) **DOWNLINK TRANSMIT OPPORTUNITY AND BLOCK ACKNOWLEDGEMENT SIGNALING FOR COEXISTENCE EVENTS IN WIRELESS LOCAL AREA NETWORK**
DOWNLINK-ÜBERTRAGUNGSGELEGENHEIT UND BLOCKBESTÄTIGUNGSSIGNALISIERUNG FÜR KOEXISTENZEREIGNISSE IN EINEM DRAHTLOSEN LOKALEN NETZWERK
SIGNALISATION D'OPPORTUNITÉ DE TRANSMISSION DE LIAISON DESCENDANTE ET D'ACCUSÉ DE RÉCEPTION DE BLOC POUR ÉVÉNEMENTS DE COEXISTENCE DANS UN RÉSEAU LOCAL SANS FIL

(30) Priority: 12.01.2024 US 202463620561 P; 07.11.2024 US 202418940265
(43) Date of publication of application: 16.07.2025
(73) Proprietor: Samsung Electronics Co., Ltd., Suwon-si, Gyeonggi-do 16677 (KR)
(72) Inventor: KOUNDOURAKIS, Michail, Cambridge, CB4 0AE (GB); HUNTER, Ian, Cambridge, CB4 0AE (GB); RISON, Mark Gorthorn, Cambridge, CB4 0AE (GB); KANDALA, Srinivas, Cambridge, CB4 0AE (GB)
(74) Representative: Kuhnen & Wacker Patent- und Rechtsanwaltsbüro PartG mbB

(56) References cited:
- GB-A- 2 373 972
- US-A1- 2011 064 062
- US-A1- 2016 381 601
- US-B2- 11 855 924
- US-B2- 8 259 668
- WEINMILLER J ET AL: "PERFORMANCE STUDY OF ACCESS CONTROL IN WIRELESS LANS - IEEE 802.11 DFWMAC AND ETSI RES 10 HIPERLAN", MOBILE NETWORKS AND APPLICATIONS, SPRINGER US, NEW YORK, vol. 2, 1 January 1997 (1997-01-01), pages 55 - 67, XP002953618, ISSN: 1383-469X, DOI: 10.1023/A:1013255927445

## Description

### BACKGROUND

### 1. Field

The disclosure relates to a system and a method of downlink (DL) transmit opportunity (TXOP) and block acknowledgement (BlockAck) signaling for coexistence (Coex) events in a wireless communication system, for example an Institute of Electrical and Electronics Engineers (IEEE) 802.11 wireless local area network (WLAN) system.

### 2. Description of Related Art

A Coex event may refer to a time period during which it is not possible for radio resources to exclusively use a particular WLAN protocol (e.g., Wi-Fi), which may result in compromised receive (RX) and transmit (TX) performance. When a Coex event blocks Wi-Fi RX or/and TX during a downlink (DL) TX opportunity (TXOP), this may cause significant performance issues which can lead to a failure or dropping of user streams, or even disconnection between a station (STA) and an access point (AP).

Currently the STA has no control of the TXOP or physical layer protocol data unit (PPDU) duration while the STA is in DL (e.g., when the STA is receiving from the AP). Therefore, the STA may be unable to communicate with the AP before or during the Coex event, which may cause a number of issues such as reduced transmission rate.

Prior art technology is known from publications US11855924, US8259668,GB2373972, US2016/381601, and US2011/064062.

### SUMMARY

Provided are methods and devices for managing a Coexistence (Coex) event that may occur during a downlink (DL) transmit opportunity (TXOP).

In accordance with an aspect of the disclosure, a first electronic device includes: a first transceiver; at least one first processor; and a first memory configured to store at least one instruction which, when executed by the at least one first processor, causes the first electronic device to: transmit an action frame to a second electronic device, wherein the action frame includes a request that any DL TXOP initiated by the second electronic device begin with an initial control frame (ICF) that signals a duration of the DL TXOP, receive the ICF requesting the DL TXOP from the second electronic device, wherein the ICF signals the duration of the DL TXOP, based on determining that a Coex event is scheduled to occur during the duration of the DL TXOP, transmit a clear-to-send extension (CTS-EXT) frame signaling a modification to the DL TXOP, and, after the modification is implemented, receive at least one frame during the DL TXOP according to the modification.

In accordance with an aspect of the disclosure, a second electronic device includes: a second transceiver; at least one second processor; and a second memory configured to store at least one instruction which, when executed by the at least one second processor, causes the second electronic device to: receive an action frame from a first electronic device, wherein the action frame includes a request that any DL TXOP initiated by the second electronic device begin with an ICF that signals a duration of the DL TXOP, transmit the ICF requesting the DL TXOP to the first electronic device, wherein the ICF signals the duration of the DL TXOP, based on a Coex event being scheduled to occur during the duration of the DL TXOP, receive CTS-EXT frame signaling a modification to the DL TXOP, and, after the modification is implemented, transmit at least one frame during the DL TXOP according to the modification.

### BRIEF DESCRIPTION OF THE DRAWINGS

The above and other aspects, features, and advantages of certain embodiments of the disclosure will be more apparent from the following description taken in conjunction with the accompanying drawings, in which:
FIG. 1 illustrates an overall structure of an example of a wireless communication system, according to embodiments;
FIG. 2 illustrates a wireless communication system, according to embodiments;
FIG. 3 illustrates an example of a Coexistence (Coex) event which may occur during a downlink (DL) TX opportunity (TXOP), according to embodiments.
FIG. 4 illustrates an approach for managing a Coex event which may occur during a downlink DL TXOP, according to embodiments.
FIGS. 5 to 7 illustrate examples of managing a Coex event which may occur during a downlink DL TXOP using a Clear to Send-extension (CTS-EXT) frame, according to embodiments.
FIGS. 8A and 8B show examples of frame formats for Block Acknowledgement (BlockAck frames), according to embodiments.
FIGS. 9 and 10 are flowcharts showing examples of processes for managing a Coex event which may occur during DL TXOP, according to embodiments.

### DETAILED DESCRIPTION

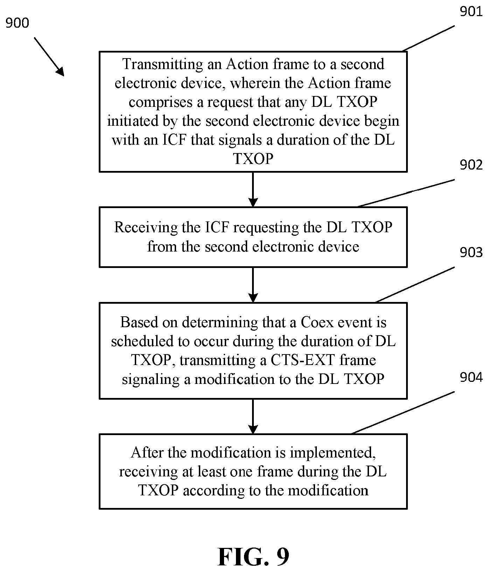

The invention made is disclosed in the embodiments referring to figure 9.

The terms as used in the disclosure are provided to merely describe specific embodiments, not intended to limit the scope of other embodiments. Singular forms include plural referents unless the context clearly dictates otherwise. The terms and words as used herein, including technical or scientific terms, may have the same meanings as generally understood by those skilled in the art. The terms as generally defined in dictionaries may be interpreted as having the same or similar meanings as or to contextual meanings of the relevant art. Unless otherwise defined, the terms should not be interpreted as ideally or excessively formal meanings. Even though a term is defined in the disclosure, the term should not be interpreted as excluding embodiments of the disclosure under other circumstances.

According to one or more embodiments, the electronic device may be one of various types of electronic devices. The electronic devices may include, for example, a network device, a router, an access point device, a terminal station in a wireless system, a portable communication device (e.g., a smartphone), a computer device, a portable multimedia device, a portable medical device, a camera, a wearable device, or a home appliance. According to an embodiment of the disclosure, the electronic devices are not limited to those described above.

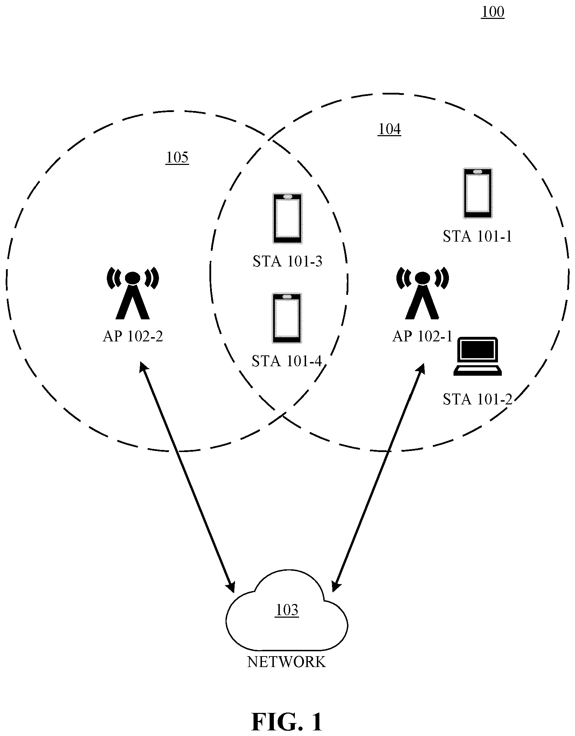

FIG. 1 illustrates an example structure of a wireless communication system, according to embodiments.

Throughout the disclosure, examples are described which relate to the Institute of Electrical and Electronics Engineers (IEEE) 802.11 wireless LAN (WLAN) standards. However, embodiments are not limited thereto. For example, some embodiments may be applied to other communication systems (e.g., a cellular communication system such as long term evolution (LTE), LTE-advanced (LTE-A), new radio (NR), wireless broadband (WiBro), a global system for mobile communication (GSM), or a short-range communication system such as Bluetooth and near field communication (NFC)) with a similar technical background and channel form with slight modifications without departing from the scope of the disclosure, as may be determined by one of ordinary skill in the art.

As shown in FIG. 1, the wireless communication system 100 may include a first station (STA) 101-1, a second STA 101-2, a third STA 101-3, a fourth STA 101-4, a first access point (AP) 102-1, and a second AP 102-2. The first AP 102-1 and the second AP 102-2 may access a network 103 that may include the Internet, an Internet protocol (IP) network, a distribution network (DN), or any other network.

The first AP 102-1 may provide the first STA 101-1, the second STA 101-2, the third STA 101-3, and the fourth STA 101-4 with access to the network 103 within a first basic service set (BSS) 104. The second AP 102-2 may provide the third STA 101-3 and the fourth STA 101-4 with access to the network 103 within a second BSS 105. In embodiments, a BSS may be a basic building block of the IEEE 802.11 WLAN system.

In embodiments, the first AP 102-1 may communicate with at least one of the first STA 101-1, the second STA 101-2, the third STA 101-3, and the fourth STA 101-4 based on IEEE 802.11 Wi-Fi, or any other WLAN access technology.

In some embodiments, an AP (e.g., the first AP 102-2 and/or the second AP 102-2) may be referred to as a router, a gateway, and the like. In some embodiments, an STA (e.g., the first STA 101-1, the second STA 101-2, the third STA 101-3, and/or the fourth STA 101-4) may be referred to as a mobile station, a subscriber station, a terminal, a mobile terminal, a wireless terminal, user equipment, a user, and the like. The STA may be a mobile device, such as a mobile phone, a laptop computer, a wearable device, or the like, or a stationary device, such as a desktop computer, a smart TV, or the like.

An AP may allocate at least one resource unit (RU) to at least one STA. The AP may transmit data through at least one allocated RU, and at least one station may receive data through at least one allocated RU. In 802.11ax (hereafter HE), an AP may allocate only a single RU to at least one STA, while in 802.11be or next-generation IEEE 802.11 standards, an AP may allocate a multi-resource unit (MRU) including two or more RUs to at least one STA. For example, the first AP 102-1 may allocate RUs to at least one of the first STA 101-1, the second STA 101-2, the third STA 101-3, and the fourth STA 101-4, and may transmit data through the allocated RUs.

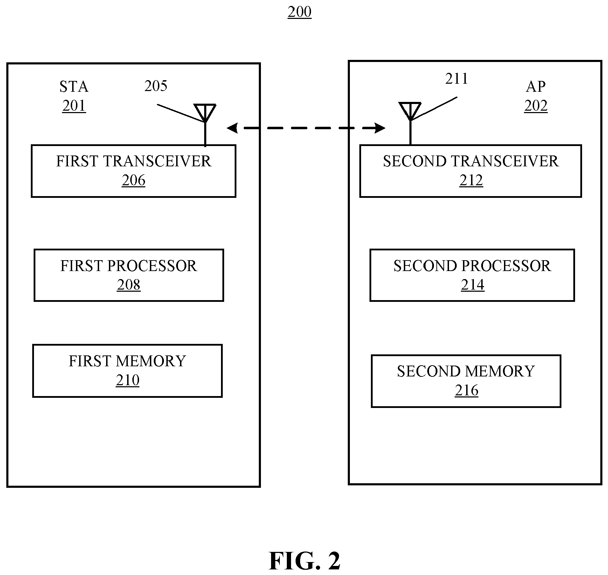

FIG. 2 illustrates a wireless communication system 200 in accordance with embodiments of the disclosure. FIG. 2 illustrates an STA 201 and an AP 202 that communicate with each other in the wireless communication system 200. In embodiments, the STA 201 may be referred to as a first electronic device and the AP 202 may be referred to as a second electronic device, but embodiments are not limited thereto. Each of the AP 202 and the STA 201 of FIG. 2 may be any apparatus communicating or configured to communicate in the wireless communication system 200 and may be referred to as an apparatus for wireless communication. In some embodiments, the STA 201 may correspond at least one of the first STA 101-1, the second STA 101-2, the third STA 101-3, and the fourth STA 101-4. In some embodiments, each of the AP 202 and the STA 201 may be an AP (e.g., the first AP 102-1 and/or the second AP 102-2 of FIG. 1) in a WLAN system.

In FIG. 2, the STA 201 may include a first antenna 205, a first transceiver 206, a first processor 208, and a first memory 210. Similarly, the AP 202 may include a second antenna 211, a second transceiver 212, a second processor 214, and a second memory 216.

In embodiments, the first antenna 205, the first transceiver 206, the first processor 208, and the first memory 210 may be included in one package or may be included in different packages, respectively. In embodiments, the second antenna 211, the second transceiver 212, the second processor 214, and the second memory 216 may be included in one package or may be included in different packages, respectively.

In embodiments, the first antenna 205 may receive a signal from the second antenna 211 and provide the received signal to the first transceiver 206, and may transmit the signal provided from the first transceiver 206 to the second antenna 211. Similarly, the second antenna 211 may receive a signal from the first antenna 205 and provide the received signal to the second transceiver 212, and may transmit the signal provided from the second transceiver 212 to the first antenna 205.

In embodiments, the first transceiver 206 may process a signal received from the STA 201 through the first antenna 205, and may provide the processed signal to the first processor 208. In embodiments, the first transceiver 206 may process the signal provided from the first processor 208 and output the processed signal through the first antenna 205. The second transceiver 212 may similarly perform the above functions performed by the first transceiver 206.

In embodiments, the first transceiver 206 and the second transceiver 212 may include one or more circuits such as a low noise amplifier, a mixer, a filter, a power amplifier, an oscillator, and the like.

In embodiments, the first processor 208 may extract information transmitted by the AP 202 by processing the signal received from the first transceiver 206. For example, the first processor 208 may extract information by demodulating and/or decoding a signal received from the first transceiver 206.

In embodiments, the first processor 208 may generate a signal including information to be transmitted to the AP 202 and provide the signal to the first transceiver 206. In embodiments, the first processor 208 may provide a signal generated by encoding and/or modulating data to be transmitted to the STA 201 to the first transceiver 206. The second processor 214 may similarly perform the above functions performed by the first processor 208 with respect to information transmitted by the STA 201 and information to be transmitted to the STA 201.

In embodiments, the first processor 208 and the second processor 214 may include a programmable component such as a central processing unit (CPU), a digital signal processor (DSP), and the like, may include reconfigurable components, such as field programmable gate arrays (FPGAs), and may include a component that provides a fixed function, such as an intellectual property (IP) core.

In embodiments, the first processor 208 may include or access the first memory 210 that stores data and/or a series of instructions. In embodiments, the second processor 214 may include or access the second memory 216 that stores data and/or a series of instructions.

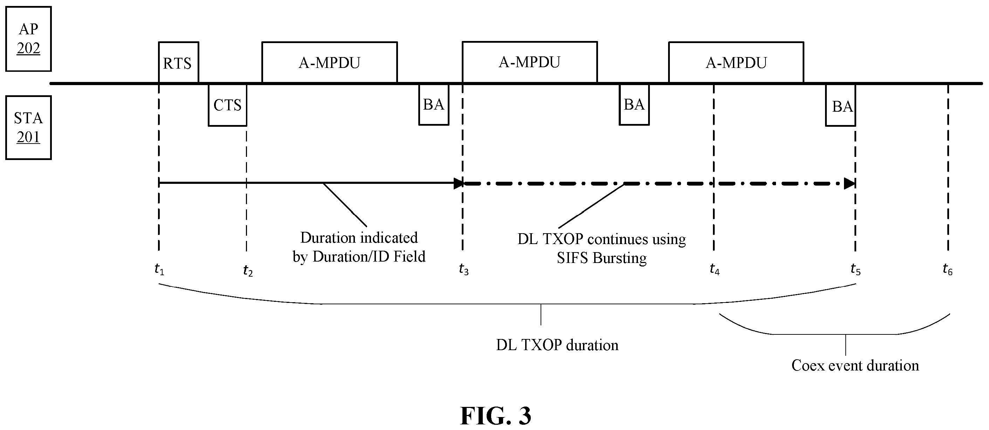

FIG. 3 illustrates an example of a Coexistence (Coex) event which may occur during a downlink (DL) TX opportunity (TXOP), according to embodiments. As discussed above, a Coexistence (Coex) event may refer to a time period during which it is not possible for radio resources to exclusively use a particular WLAN protocol (e.g., Wi-Fi), which may result in compromised receive (RX) and transmit (TX) performance. When a Coex event blocks at least one of Wi-Fi RX and TX during a downlink (DL) TX opportunity (TXOP), this may cause significant performance issues which can lead to a failure or dropping of user streams, or even disconnection between an STA and an AP.

As shown in FIG. 3, at a time *t*₁ the AP 202 may transmit a Ready to Send (RTS) frame, which may include a Duration/Identifier (Duration/ID) field which may indicate a duration of a DL TXOP during which the AP 202 may transmit at least one data frame to the STA 201. In some embodiments, the at least one data frame may be at least one MPDU, and the at least one MPDU may be aggregated into an Aggregate-Media Access Control (MAC) Protocol Data Unit (A-MPDU). Accordingly, the at least one data frame may therefore correspond to, or may be otherwise associated with, an A-MPDU. However, embodiments are not limited thereto. Although examples are provided herein in which the data frames to be transmitted during DL TXOPs correspond to or are included in A-MPDUs, embodiments are not limited thereto, and in some embodiments the data frames may be another type of frame.

In some embodiments, as shown for example in FIG. 3, the RTS frame may only cover a first exchange between the AP 202 and the STA 201, for example a first A-MPDU and a first Block Acknowledgment (BlockAck) frame (illustrated as "BA") after time *t*₂, when the STA 201 replies with a Clear to Send (CTS) frame. However, the AP 202 may extend the DL TXOP using Short Interframe Space (SIFS) bursting in order to transmit additional A-MPDUs to the STA 201. As a result, the Duration/ID field may only indicate the duration between the time *t*₁ and the time *t*₃, but the actual duration of the DL TXOP may be the duration between the time *t*₁ and the time *t*₅. However, a Coex event may be scheduled to begin at a time *t*₄, which may be before the time *t*₅, and the Coex event may extend until a time *t*₆. Accordingly, the DL TXOP may be interrupted by the Coex event. If the STA 201 has no control of the DL TXOP or the A-MPDU or PPDU duration while the STA 201 is in DL (e.g., when the STA 201 is receiving from the AP 202), the STA 201 may be unable to transmit any information to the AP 202 before or during the Coex event, which may cause a number of issues.

For example, the STA 201 may be unable to transmit response frames such as Acknowledgement (Ack) frames, BlockAck frames, and CTS frames, when these response frames overlap with Coex events, which may lead the AP 202 to mistakenly assume that transmission errors have occurred, and therefore reduce its physical layer (PHY) rate. In addition, frame transmission may take a greater amount of time, and as the rate reduces the duration increases, to the point that frames may not be able to fit into the WLAN time available between Coex events. Also, the STA 201 may be unable to initiate an uplink (UL) TXOP (e.g., a transmission to the AP) prior to the start of the Coex event, which may be necessary to communicate state changes such as moving into Power Save (PS) mode (e.g., Power Management (PM)=1), or reserving the Network Allocation Vector (NAV) (for example by transmitting a CTS-to-self frame).

One approach for managing Coex events includes allowing the STA 201 to tear down RX BlockAck agreements, so that they may be set up again later by the AP 202. For example, the STA 201 may advertise a small buffer in the Add Block Acknowledgment (ADDBA) Response frame so that the AP 202 may not only aggregate a small number of MPDUs in an A-MPDU. According to another approach for managing Coex events, the STA 201 may not respond to a received RTS frame and/or Multi User-RTS (MU-RTS) frame when the Ack frame is predicted to fall within the Coex event, however this may only be effective when the AP 202 uses an RTS frame and/or a MU-RTS frame to initiate a DL TXOP. According to yet another approach for managing Coex events, the STA 201 may simply not transmit an Ack frame when the STA 201 wishes to interrupt the DL TXOP, in hopes of later winning an uplink (UL) TXOP. However, some of these approaches may result in the AP 202 reducing its TX physical layer (PHY) rate, which may exacerbate the issues discussed above.

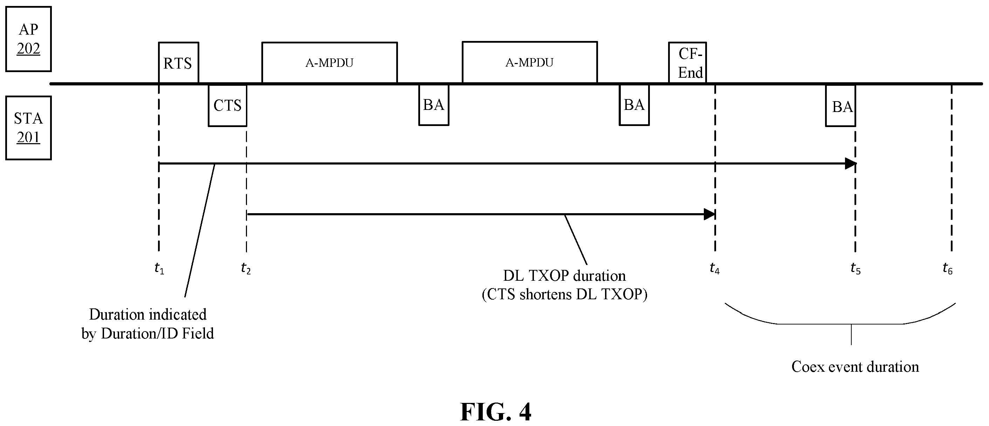

FIG. 4 illustrates an approach for managing a Coex event which may occur during a downlink DL TXOP, according to embodiments. As shown in FIG. 4, the STA 201 may shorten the DL TXOP so that it ends at the time *t*₄ instead of the time *t*₅, and therefore conflicts between the DL TXOP and the scheduled Coex event may be avoided. For example, the STA 201 may transmit a CTS frame having a Duration/ID field. However, this is only possible if the Duration/ID field included in the RTS frame transmitted by the AP 202 indicates the entire duration of the DL TXOP (e.g., the duration between the time *t*₁ and the time *t*₅), which may not be guaranteed to happen.

Accordingly, embodiments relate to novel techniques for managing DL TXOPs based on scheduled Coex events. For example, embodiments may allow the STA 201 to exercise more control over the DL TXOP in order to avoid conflicts between the DL TXOP and the Coex event. Embodiments may allow the STA 201 to request that the AP 202 use an initial control frame (ICF) that includes particular information in order to initiate a DL TXOP. Embodiments may allow the STA 201 to control the duration of the DL TXOP, and may also allow the AP 202 to re-use or return any unused TXOP. Embodiments may allow the STA 201 to efficiently communicate, during the DL TXOP, state changes which will apply after the DL TXOP ends, making the need for an additional UL TXOP to be redundant. Embodiments may allow the STA 201 to request for TXOP Sharing to be used within a DL TXOP, which may enable concurrent operation use cases to re-use a UL portion of the TXOP for Coex-related absence signalling, which may improve Coex performance. Embodiments may allow the STA 201 to use a new BlockAck variant frame to inform the AP 202 about how many MPDUs were received with one or more of a bad frame check sequence (FCS) or a bad MPDU delimiter cyclic redundancy checksum (CRC) or signature, which may be used by the AP 202 in its TX PHY rate selection (e.g., to avoid reducing the rate when MPDUs are not acknowledged). In addition, embodiments may allow the STA 201 to retain at least some backward compatibility for legacy STAs. For example, according to some embodiments, the NAV reservation may remain unaffected so that legacy STAs may unaffected even if they are unable to parse or otherwise interpret some frames according to embodiments.

According to embodiments, the STA 201 may transmit to the AP 202 a new type of signaling, for example a new Action frame, which may include a request that, when the AP 202 initiates any DL TXOP, the AP 202 do so using use an initial control frame (ICF) which includes a Duration/ID field indicates the full duration of the DL TXOP (e.g., request that the AP 202 apply multiple protection). In embodiments, the ICF may be, or may include, an RTS frame, a trigger frame such as a MU-RTS frame, or a new type of control frame. In response to the ICF, the STA 201 may transmit to the AP 202 a new control frame variant which may be referred to as a CTS-extension (CTS-EXT) frame, and which may include signaling which modifies the DL TXOP.

For example, according to embodiments the CTS-EXT may reduce the TXOP duration to avoid conflicts with scheduled Coex events, while still allowing some data frames to be transmitted.

According to embodiments, the CTS-EXT may indicate that the STA 201 will enter PS mode after the end of the DL TXOP. Therefore, the AP 202 may refrain from transmitting to the STA 201 the after the completion of the DL TXOP, so that the STA 201 may proceed to the Coex event.

According to embodiments, the CTS-EXT may include a request that TXOP Sharing may be used within the DL TXOP. Therefore, the STA 201 may communicate additional information during the DL TXOP, which may reduce the need for additional UL TXOPs.

According to embodiments, the STA 201 may use the CTS-EXT to report Coex events which are scheduled to occur after the completion of the DL TXOP, so that the AP 202 is aware of the Coex events.

According to embodiments, the CTS-EXT may indicate that the STA 201 will enter PS mode immediately after the CTS-EXT is acknowledged, and may therefore allow no data frames to be transmitted during the DL TXOP. For example, the STA 201 may determine that the DL TXOP will be too short for any data frames to be properly received, so the STA 201 may use the CTS-EXT to terminate the DL TXOP before any data frames are transmitted.

In addition, in some embodiments, all STAs that receive the ICF and the CTS-EXT frame may update their NAV accordingly, for example by using a reduced NAV indicated by the CTS-EXT. Further, according to some embodiments, a BlockAck frame extension may be used to report additional information such as subframe errors in A-MPDUs received during the DL TXOP. This additional information, reported back to the AP 202, may allow the AP 202 to differentiate between low signal-to-noise ratio (SNR) and interference (including Coex events), so Rate Adaptation logic may be enhanced.

As a result, by allowing the STA 201 to exert some control over the DL TXOP duration and TXOP Sharing, and by allowing advance communication of state changes during the DL TXOP, embodiments may provide improved Coex performance including more efficient medium utilization, which may benefit all devices operating in a BSS. Accordingly, embodiments may allow improved Wi-Fi DL performance in Coex use cases, especially those with periodic Coex events, while also maintaining backward compatibility with legacy devices.

According to embodiments, the Action frame discussed above may allow the STA 201 to request that any DL TXOPs are initiated by an ICF which requires a response. For example, in some embodiments the ICF may be a frame such as an RTS frame or an MU-RTS frame, or the ICF frame may be a new Control frame, but embodiments are not limited thereto.

In embodiments, the AP 202 may unilaterally decide whether to initiate a DL TXOP using one of these frames, so embodiments may relate to the definition of a new Action frame or new signaling (e.g, in Capabilities information, or in Operating Mode Notification) which may be transmitted by the STA 201 to the AP 202 to request that the AP uses an ICF when it starts a DL TXOP with the STA 201, and that the Duration/ID field of the ICF is set to cover the full DL TXOP (which may be referred to as "multiple protection"). As discussed above with reference to FIG. 3, some APs may set the Duration/ID field to cover until the end of the first exchange, for example the first Data PPDU and the first Ack or BlockAck (which may be referred to as "single protection") and then continue the DL TXOP by transmitting SIFS after the end of the previous PPDU (the timing may guarantee that no other device can interrupt the DL TXOP). In order to avoid this situation, embodiments may allow the STA 201 to determine based on the ICF when the AP 202 plans to finish the DL TXOP, so that the STA 201 may use the CTS-EXT to modify the DL TXOP and/or report back to the AP whether the end of the DL TXOP is later than the start of the next scheduled local Coex event.

After receiving ICF according to embodiments, the STA 201 may respond using the CTS-EXT. In contrast with a CTS frame, the Duration/ID field of the CTS-EXT may cause the DL TXOP to be shortened so that it ends before the end of the duration reserved by the NAV corresponding to the ICF. When the AP 202 receives a CTS-EXT in response to an ICF which initiates a DL TXOP, the AP 202 may ensure that the DL TXOP completes within the NAV signaled by the CTS-EXT. In order to do so, the AP 202 may parse the CTS-EXT frame to identify further changes to the DL TXOP or the state of the STA 201.

For example, according to embodiments, the CTS-EXT may include a TXOP Sharing Request element which requests that the AP 202 share some of the DL TXOP for UL. The AP 202 may use TXOP Sharing Request element parameters, within the current DL TXOP, to enable the requested UL. For example, the TXOP Sharing Request element may include parameters which indicate the duration of the UL TXOP and the mode (e.g., "1" for transmissions to the AP 202, or "2" for transmissions to other STAs). The STA may include PS Mode element or equivalent signalling to signal it will enter in PS mode at the end of the TXOP.

According to embodiments, the CTS-EXT may set the PM subfield in the MAC header to signal an imminent PS Mode change. The AP 202 may then transmit an Ack frame in response and terminate the DL TXOP.

According to embodiments, the CTS-EXT may include a Local Coex Event element, which may signal the start and end (or duration) of a Coex event. The AP 202 may refrain from transmitting unicast frames to the STA 201 during the Coex event, because the STA 201 may not be able to receive or respond to them.

According to embodiments, the AP 202 may also terminate the current NAV by transmitting a CF-End, SIPS after the DL TXOP ends (as signaled by the CTS-EXT Duration/ID field).

In some embodiments, other STAs that receive both the ICF and SIFS after the CTS-EXT frame, may not update their NAV. If a new control frame variant is defined to start a DL TXOP (paired with CTS-EXT) new NAV rules may be defined so that STAs which understand their format may use the value of the Duration/ID field to update their NAV.

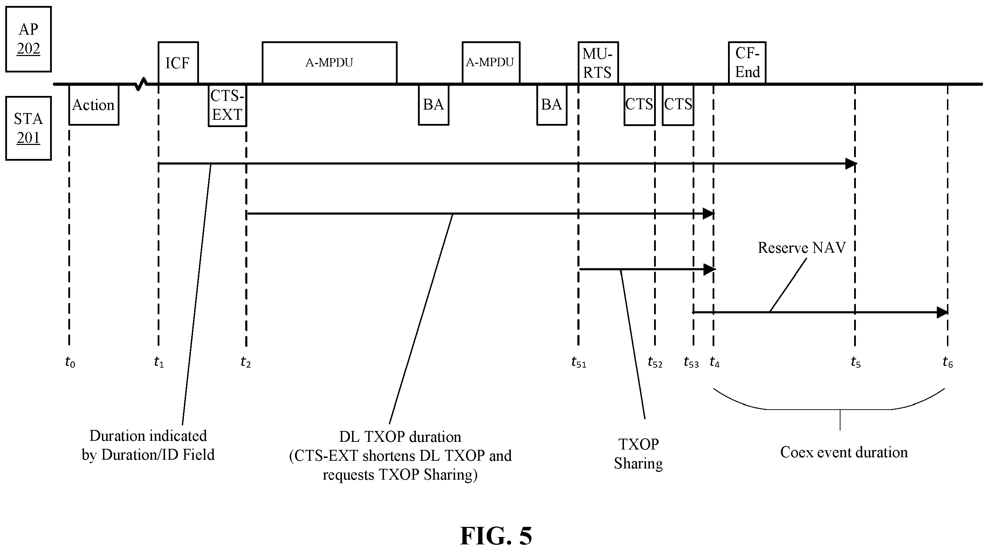

FIGS. 5 to 7 illustrate examples of managing a Coex event which may occur during a downlink DL TXOP using a CTS-EXT frame, according to embodiments.

For example, as shown in FIG. 5, at a time *t*₀ which is before the AP 202 initiates a DL TXOP, the STA 201 may transmit an Action frame to the AP 202 as discussed above. In embodiments, the Action frame may include a request that that any DL TXOP initiated by the AP 202 begin with an ICF that signals a duration of the DL TXOP. At the time *t*₁, the AP 202 may transmit the ICF which initiates the DL TXOP, and which indicates the duration of the DL TXOP (e.g., the duration between the time *t*₁ and the time *t*₆). Based on determining that a Coex event is scheduled to begin at the time *t*₄, which is before end of the DL TXOP , the STA 201 may transmit a CTS-EXT frame which shortens the duration of the DL TXOP. For example, the CTS-EXT may signal that the DL TXOP will end at the time *t*₄, and may also include a request for TXOP Sharing to be allowed. According to the CTS-EXT, the TXOP Sharing may begin at a time *t*₅₁ and may end at the time *t*₄. At the time *t*₅₁, the AP 202 may transmit an MU-RTS frame in accordance with the TXOP sharing, and the STA 201 may transmit a CTS frame in response at a time *t*₅₂. In the example shown in FIG. 5, the STA 201 may concurrently operate as a mobile-AP (M-AP) and may transmit a CTS frame at a time *t*₅₃ which may be a CTS-to-self frame which may be used to reserve the NAV for its BSS until the Coex event is completed (e.g., from the time *t*₅₃ to the time *t*₆).

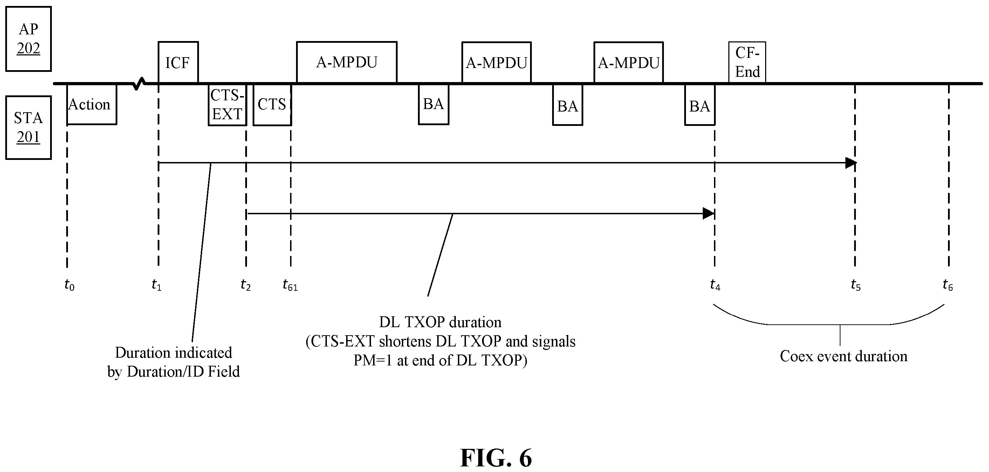

FIG. 6 shows another example in which, after transmitting the Action frame at the time *t*₀ and receiving the ICF at the time *t*₁, the STA 201 may transmit a CTS-EXT frame at the time *t*₂ which shortens the duration of the DL TXOP as discussed above, and which also signals that the STA 201 will enter the PS mode (e.g., PM=1) at the end of the DL TXOP (e.g., at the time *t*₄). After the time *t*₄ the AP 202 may transmit a Contention Free-End (CF-End) frame indicating the end of the DL TXOP.

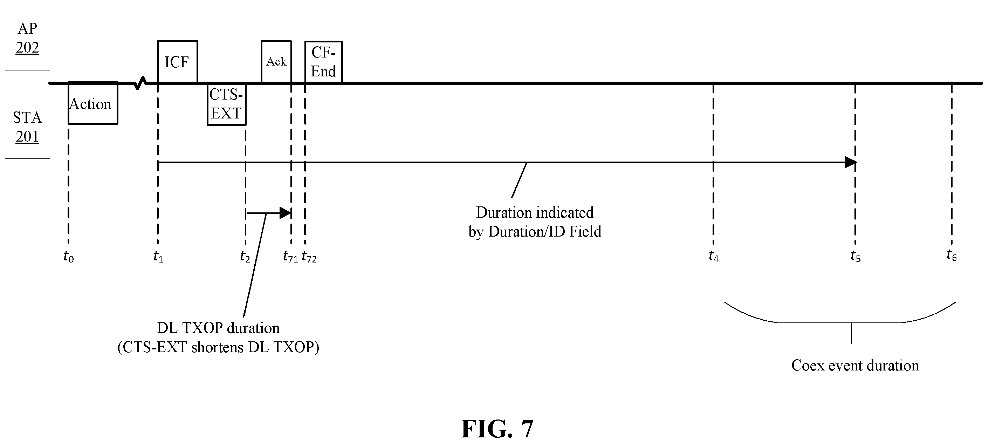

FIG. 7 shows another example in which, the Action frame at the time *t*₀ and receiving the ICF at the time *t*₁, the STA 201 may determine not to proceed with the DL TXOP, for example because the DL TXOP will be too short for data frames to be received and/or acknowledged. Accordingly, the STA 201 may transmit a CTS-EXT frame at the time *t*₂ which shortens the DL TXOP and indicates that it will enter the PS mode immediately receiving an Ack frame corresponding to the CTS-EXT frame. The AP 202 may transmit the Ack frame at a time *t*₇₁, and the STA 201 may then enter the PS mode. Subsequently, the AP 202 may transmit a CF-End frame at a time *t*₇₂. In some embodiments, the CTS-EXT may not request the Ack frame to be transmitted. However, if the AP 202 misses the CTS-EXT frame, the AP 202 may start backoff and eventually initiate a new DL TXOP.

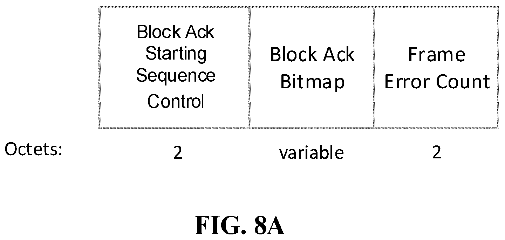

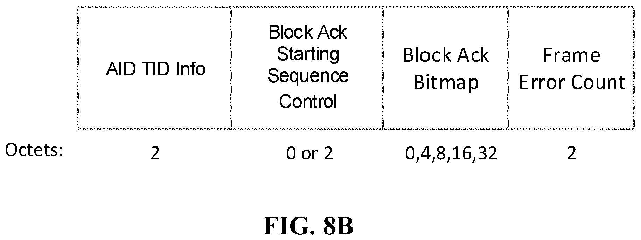

FIGS. 8A and 8B show examples of frame formats for BlockAck frames, according to embodiments. A BlockAck frame may indicate MPDUs successfully received in the Block Ack Bitmap subfield. When a bit is set to zero ("0"), this may indicate that the corresponding MPDU is not being reported as received. However, the interpretation of the reason or reasons for the MPDU being not received is left to the recipient of the BlockAck frame. For example, the AP 202 may assume that unsuccessful MPDUs are caused by low SNR, so a common reaction is to reduce the TX PHY rate used by the AP 202. In the case of failures caused by a Coex event at the STA 201, this may be a counterproductive change, because lower TX PHY rate may cause the PPDUs to become longer, therefore statistically more DL TXOPs may clash with Coex events, and the DL performance (e.g., the throughput) may be reduced. In addition, the TX PHY may be reduced so much that even a single MPDU may not fit between consecutive Coex events, which may cause user data to fail and may cause the AP 202 to disconnect the STA 201.

Accordingly, embodiments may provide a Frame Error Count (FEC) BlockAck frame, which may be a BlockAck frame extension, to assist the recipient of the BlockAck frame in distinguishing between low SNR issues and other reasons for errors, for example Coex events, which may be seen as a form of interference that makes the STA 201 either unable to receive the MPDUs or to respond with the acknowledge frame. In embodiments, the FEC BlockAck frame may include an FEC field, and the STA 201 may increment the value of the FEC field for each MPDU received with a bad FCS, or bad MPDU delimiter CRC or signature. In embodiments, the FEC field may indicate a number of errors in a Parity bit of an 11a/L-SIG header. In some embodiments, the FEC BlockAck frame may be transmitted by the AP 202 to the STA 201.

In embodiments, this extension may be used to enhance BlockAck frame formats (e.g., as an add-on to IEEE 802.11 BlockAck frame variants). For example, FIG. 8A shows a portion of an FEC Compressed BlockAck frame, which may be a Compressed BlockAck frame to which an FEC field is added. As another example, FIG. 8B shows a portion of an FEC Multi-STA BlockAck frame, which may be a Multi-STA BlockAck frame to which an FEC field is added.

FIG. 9 is a flow chart of process 900 for managing a Coex event which may occur during DL TXOP. In some implementations, one or more process blocks of FIG. 9 may be performed by one or more of the elements discussed above, for example one or more of the STA 201, the AP 202, and the elements included therein.

As shown in FIG. 9, at operation 901 the process 900 may include transmitting an Action frame from a first electronic device to a second electronic device, wherein the Action frame includes a request that any DL TXOP initiated by the second electronic device begin with an ICF that signals a duration of the DL TXOP. In embodiments, the first electronic device may correspond to the STA 201, and the second electronic device may correspond to the AP 202.

As further shown in FIG. 9, at operation 902 the process 900 may further include receiving, by the first electronic device, the ICF requesting the DL TXOP from the second electronic device, wherein the ICF signals the duration of the DL TXOP.

As further shown in FIG. 9, at operation 903 the process 900 may further include, based on determining, by the first electronic device, that a Coex event is scheduled to occur during the duration of the DL TXOP, transmitting a CTS-EXT frame signaling a modification to the DL TXOP.

As further shown in FIG. 9, at operation 904 the process 900 may further include receiving, by the first electronic device, at least one frame during the DL TXOP according to the modification. For example, after the modification is implemented and the DL TXOP is modified, the first electronic device may receive the at least one frame during the modified DL TXOP. The at least one frame may comply with the modification to the DL TXOP.

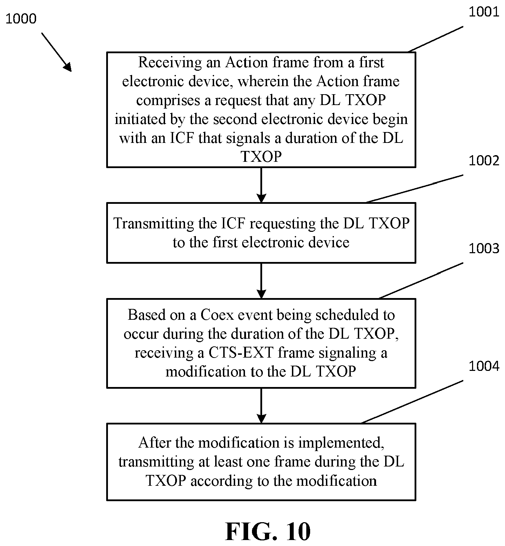

FIG. 10 is a flow chart of process 1000 for managing a Coex event which may occur during DL TXOP. In some implementations, one or more process blocks of FIG. 10 may be performed by one or more of the elements discussed above, for example one or more of the STA 201, the AP 202, and the elements included therein.

As shown in FIG. 10, at operation 1001, the process 1000 may include receiving, by a second electronic device, an Action frame from a first electronic device, wherein the Action frame comprises a request that any DL TXOP initiated by the second electronic device begin with an ICF that signals a duration of the DL TXOP. In embodiments, the first electronic device may correspond to the STA 201, and the second electronic device may correspond to the AP 202.

As further shown in FIG. 10, at operation 1002, the process 1000 may include transmitting, by the second electronic device, the ICF requesting the DL TXOP to the first electronic device, wherein the ICF signals the duration of the DL TXOP.

As further shown in FIG. 10, at operation 1003, the process 1000 may include, based on a Coex event being scheduled to occur during the duration of the DL TXOP, receiving a CTS-EXT frame signaling a modification to the DL TXOP from the first electronic device.

As further shown in FIG. 10, at operation 1004, the process 1000 may include transmitting, by the second electronic device, at least one frame during the DL TXOP according to the modification. For example, after the modification is implemented and the DL TXOP is modified, the second electronic device may transmit the at least one frame during the modified DL TXOP. The at least one frame may comply with the modification to the DL TXOP.

In embodiments, the modification may include reducing the duration of the DL TXOP, and the at least one frame may include at least one data frame received by the first electronic device from the second electronic device during the reduced duration of the DL TXOP.

In embodiments, the at least one frame may include an acknowledgement frame received from the second electronic device based on the CTS-EXT frame, and the at least one instruction may cause the first electronic device to, based on the modification, enter a PS mode immediately after receiving the acknowledgement frame. In embodiments, the acknowledgement frame may correspond to the Ack frame discussed above.

In embodiments, the modification may include allowing TXOP sharing during the DL TXOP. For example, based on the modification, the first electronic device may initiate TXOP sharing during the DL TXOP, and the second electronic device may allow TXOP sharing during the DL TXOP.

In embodiments, the modification may include reducing the duration of the DL TXOP, and the CTS-EXT frame may further indicate that the coexistence event is scheduled to occur after the reduced duration of the DL TXOP.

In embodiments, the ICF and the CTS-EXT frame may be received by an additional electronic device, and the CTS-EXT frame may signal to the additional electronic device to update a NAV according to the modification.

In embodiments, the at least one frame may include an A-MPDU, and based on the modification, the first electronic device may transmit an acknowledgement frame indicating a number of subframe errors corresponding to the A-MPDU. In embodiments, the acknowledgment frame may correspond to the FEC BlockAck frame discussed above.

In embodiments, the ICF may include at least one from among an RTS frame and MU-RTS frame, and the acknowledgement frame may include a BlockAck frame which indicates an FEC corresponding to the A-MPDU.

Although FIGS. 9 and 10 show example blocks of processes 900 and 1000, in some implementations, processes 900 and 1000 may include additional blocks, fewer blocks, different blocks, or differently arranged blocks than those depicted in FIGS. 9 and 10. Additionally, or alternatively, two or more of the blocks of processes 900 and 1000 may be performed in parallel.

The disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. A singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C", may include any one of, or all possible combinations of the items enumerated together in a corresponding one of the phrases. As used herein, such terms as "1st" and "2nd", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., via wires), wirelessly, or via a third element.

As used in connection with the disclosure, the term "module" may include a unit implemented in hardware, software, or firmware, and may interchangeably be used with other terms, for example, logic, logic block, part, or circuitry. A module may be a single integral component, or a minimum unit or part thereof, adapted to perform one or more functions. For example, according to an embodiment, the module may be implemented in a form of an application-specific integrated circuit (ASIC).

One or more embodiments as set forth herein may be implemented as software including one or more instructions that are stored in a storage medium that is readable by a machine. For example, a processor of the machine may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to one or more embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to one or more embodiments, each component (e.g., a module or a program) of the above-described components may include a single entity or multiple entities. According to one or more embodiments, one or more of the above-described components may be omitted, or one or more other components may be added. Alternatively or additionally, a plurality of components (e.g., modules or programs) may be integrated into a single component. In such a case, according to one or more embodiments, the integrated component may still perform one or more functions of each of the plurality of components in the same or similar manner as they are performed by a corresponding one of the plurality of components before the integration. According to one or more embodiments, operations performed by the module, the program, or another component may be carried out sequentially, in parallel, repeatedly, or heuristically, or one or more of the operations may be executed in a different order or omitted, or one or more other operations may be added.

According to one or more embodiments, in a non-volatile storage medium storing instructions, the instructions may be configured to, when executed by at least one processor, cause the at least one processor to perform at least one operation. The at least one operation may include displaying an application screen of a running application on a display, identifying a data input field included in the application screen, identifying a data type corresponding to the data input field, displaying at least one external electronic device, around the electronic device, capable of providing data corresponding to the identified data type, receiving data corresponding to the identified data type from an external electronic device selected from among the at least one external electronic device through a communication module, and entering the received data into the data input field.

## Claims

1. A first electronic device (STA 201) comprising:
a first transceiver (206);
at least one first processor (208); and
a first memory (210) configured to store at least one instruction which, when executed by the at least one first processor (208), causes the first electronic device (STA 201) to:
transmit (901) an action frame to a second electronic device (AP 202), wherein the action frame comprises a request that any downlink, DL, transmit opportunity, TXOP, initiated by the second electronic device begin with an initial control frame, ICF, that signals a duration of the DL TXOP,
receive (902) the ICF requesting the DL TXOP from the second electronic device (AP 202), wherein the ICF signals the duration of the DL TXOP,
based on determining that a coexistence event is scheduled to occur during the duration of the DL TXOP, transmit (903) a clear-to-send extension, CTS-EXT, frame signaling a modification to the DL TXOP, and
after the modification is implemented, receive (904) at least one frame during the DL TXOP according to the modification.

2. The first electronic device (STA 201) of claim 1, wherein the first electronic device (STA 201) and the second electronic device (AP 202) are included in an Institute of Electrical and Electronics Engineers, IEEE, 802.11 wireless local area network, WLAN,
wherein the first electronic device (STA 201) comprises a non-access point station in the WLAN, and
wherein the second electronic device (AP 202) comprises an access point in the WLAN.

3. The first electronic device (STA 201) of claim 1 or 2, wherein the modification comprises reducing the duration of the DL TXOP, and
wherein the at least one frame comprises at least one data frame received during the reduced duration of the DL TXOP.

4. The first electronic device (STA 201) of any one of claims 1 to 3, wherein the at least one frame comprises an acknowledgement frame received from the second electronic device (AP 202) based on the CTS-EXT frame, and
wherein the at least one instruction further causes the first electronic device (STA 201) to, based on the modification, enter a power save, PS, mode immediately after receiving the acknowledgement frame.

5. The first electronic device (STA 201) of any one of claims 1 to 4, wherein, based on the modification, the at least one instruction further causes the first electronic device (STA 201) to initiate TXOP sharing during the DL TXOP.

6. The first electronic device (STA 201) of any one of claims 1 to 5, wherein the modification comprises reducing the duration of the DL TXOP, and
wherein the CTS-EXT frame indicates that the coexistence event is scheduled to occur after the reduced duration of the DL TXOP.

7. The first electronic device (STA 201) of any one of claims 1 to 6, wherein the ICF and the CTS-EXT frame are received by an additional electronic device, and
wherein the CTS-EXT frame signals to the additional electronic device to update a network allocation vector, NAV, according to the modification.

8. The first electronic device (STA 201) of any one of claims 1 to 7, wherein the at least one frame comprises an aggregated media access control protocol data unit, A-MPDU, and
wherein based on the modification, the at least one instruction further causes the first electronic device (STA 201) to transmit an acknowledgement frame indicating a number of subframe errors corresponding to the A-MPDU.

9. The first electronic device (STA 201) of claim 8, wherein the ICF comprises at least one from among a request to send, RTS, frame and a multi user RTS, MU-RTS, frame,
wherein the acknowledgement frame comprises a block acknowledgement frame which indicates a frame error count, FEC, corresponding to the A-MPDU.

10. A second electronic device (AP 202) comprising:
a second transceiver (212);
at least one second processor (214); and
a second memory (216) configured to store at least one instruction which, when executed by the at least one second processor (214), causes the second electronic device (AP 202) to:
receive (1001) an action frame from a first electronic device (STA 201), wherein the action frame comprises a request that any downlink, DL, transmit opportunity, TXOP, initiated by the second electronic device begin with an initial control frame, ICF, that signals a duration of the DL TXOP,
transmit (1002) the ICF requesting the DL TXOP to the first electronic device (STA 201), wherein the ICF signals the duration of the DL TXOP,
based on a coexistence event being scheduled to occur during the duration of the DL TXOP, receive (1003) a clear-to-send extension, CTS-EXT, frame signaling a modification to the DL TXOP, and
after the modification is implemented, transmit (1004) at least one frame during the DL TXOP according to the modification.

11. The second electronic device (AP 202) of claim 10, wherein the first electronic device (STA 201) and the second electronic device (AP 202) are included in an Institute of Electrical and Electronics Engineers, IEEE, 802.11 wireless local area network, WLAN,
wherein the first electronic device (STA 201) comprises a non-access point station in the WLAN, and
wherein the second electronic device (AP 202) comprises an access point in the WLAN.

12. The second electronic device (AP 202) of claim 10 or 11, wherein the modification comprises reducing the duration of the DL TXOP, and
wherein the at least one frame comprises at least one data frame transmitted during the reduced duration of the DL TXOP.

13. The second electronic device (AP 202) of any one of claims 10 to 12, wherein the at least one frame comprises an acknowledgement frame transmitted to the first electronic device (STA 201) based on the CTS-EXT frame, and
wherein the CTS-EXT frame indicates that the first electronic device (STA 201) will enter a power save, PS, mode immediately after receiving the acknowledgement frame .

14. The second electronic device (AP 202) of any one of claims 10 to 13, wherein based on the modification, the at least one instruction further causes the second electronic device (AP 202) to allow TXOP sharing during the DL TXOP.

15. The second electronic device (AP 202) of any one of claims 10 to 14, wherein the modification comprises reducing the duration of the DL TXOP, and
wherein the CTS-EXT frame indicates that the coexistence event is scheduled to occur after the reduced duration of the DL TXOP.

## Patentansprüche

1. Erste elektronische Vorrichtung (STA 201), aufweisend:
einen ersten Transceiver (206);
mindestens einen ersten Prozessor (208); und
einen ersten Speicher (210), der so konfiguriert ist, dass er mindestens eine Anweisung speichert, die, wenn sie durch den mindestens einen ersten Prozessor (208) ausgeführt wird, bewirkt, dass die erste elektronische Vorrichtung (STA 201):
einen Action-Frame an eine zweite elektronische Vorrichtung (AP 202) sendet (901), wobei der Action-Frame eine Anforderung aufweist, dass jede durch die zweite elektronische Vorrichtung initiierte Downlink-Übertragungsgelegenheit, DL TXOP, mit einem initialen Control-Frame, ICF, beginnt, der eine Dauer der DL TXOP signalisiert,
den ICF, der die DL-TXOP anfordert, von der zweiten elektronischen Vorrichtung (AP 202) empfängt (902), wobei der ICF die Dauer der DL-TXOP signalisiert,
basierend darauf, dass bestimmt wird, dass ein Koexistenzereignis während der Dauer der DL-TXOP planmäßig eintreten soll, einen "Clear-to-Send"-Extension-, CTS-EXT- Frame sendet (903), der eine Modifikation der DL-TXOP signalisiert, und
nachdem die Modifikation (904) implementiert worden ist, mindestens einen Frame während der DL-TXOP gemäß der Modifikation empfängt.

2. Erste elektronische Vorrichtung (STA 201) nach Anspruch 1, wobei die erste elektronische Vorrichtung (STA 201) und die zweite elektronische Vorrichtung (AP 202) in einem drahtlosen lokalen Netzwerk, WLAN, nach Institute of Electrical and Electronics Engineers, IEEE, 802.11 umfasst sind,
wobei die erste elektronische Vorrichtung (STA 201) eine Non-Access-Point-Station in dem WLAN aufweist und
wobei die zweite elektronische Vorrichtung (AP 202) einen Access-Point in dem WLAN aufweist.

3. Erste elektronische Vorrichtung (STA 201) nach Anspruch 1 oder 2, wobei die Modifikation ein Reduzieren der Dauer der DL-TXOP beinhaltet, und
wobei der mindestens eine Frame mindestens einen Data-Frame aufweist, der während der reduzierten Dauer der DL-TXOP empfangen wurde.

4. Erste elektronische Vorrichtung (STA 201) nach einem der Ansprüche 1 bis 3, wobei der mindestens eine Frame einen Acknowledgement-Frame aufweist, der von der zweiten elektronischen Vorrichtung (AP 202) basierend auf dem CTS-EXT-Frame empfangen wurde, und
wobei die mindestens eine Anweisung ferner bewirkt, dass die erste elektronische Vorrichtung (STA 201) basierend auf der Modifikation unmittelbar nach dem Empfangen des Acknowledgement-Frame in einen Energiespar-, PS-, Modus übergeht.

5. Erste elektronische Vorrichtung (STA 201) nach einem der Ansprüche 1 bis 4, wobei die mindestens eine Anweisung basierend auf der Modifikation ferner bewirkt, dass die erste elektronische Vorrichtung (STA 201) während der DL-TXOP ein TXOP-Sharing initiiert.

6. Erste elektronische Vorrichtung (STA 201) nach einem der Ansprüche 1 bis 5, wobei die Modifikation das Reduzieren der Dauer der DL-TXOP umfasst und
wobei der CTS-EXT-Frame anzeigt, dass das Koexistenzereignis planmäßig nach der reduzierten Dauer der DL-TXOP stattfinden soll.

7. Erste elektronische Vorrichtung (STA 201) nach einem der Ansprüche 1 bis 6, wobei der ICF und der CTS-EXT-Frame von einer zusätzlichen elektronischen Vorrichtung empfangen werden und
wobei der CTS-EXT-Frame der zusätzlichen elektronischen Vorrichtung signalisiert, einen Netzwerkzuweisungsvektor, NAV, entsprechend der Modifikation zu aktualisieren.

8. Erste elektronische Vorrichtung (STA 201) nach einem der Ansprüche 1 bis 7, wobei der mindestens eine Frame eine aggregierte Media-Access-Control-Protokolldateneinheit, A-MPDU, aufweist und
wobei die mindestens eine Anweisung basierend auf der Modifikation ferner bewirkt, dass die erste elektronische Vorrichtung (STA 201) einen Acknowledgement-Frame sendet, der eine Anzahl von Sub-Frame-Fehlern entsprechend der A-MPDU anzeigt.

9. Erste elektronische Vorrichtung (STA 201) nach Anspruch 8, wobei der ICF einen von einem "Request-to-Send"-, RTS-, Frame und/oder einem "Multi-User-RTS-", MU-RTS-, Frame aufweist,
wobei der Acknowledgement-Frame einen Block-Acknowledgement-Frame aufweist, der eine der A-MPDU entsprechende Frame-Fehlerzahl, FEC, angibt.

10. Zweite elektronische Vorrichtung (AP 202), aufweisend:
einen zweiten Transceiver (212);
mindestens einen zweiten Prozessor (214); und
einen zweiten Speicher (216), der so konfiguriert ist, dass er mindestens eine Anweisung speichert, die, wenn sie durch den mindestens einen zweiten Prozessor (214) ausgeführt wird, bewirkt, dass die zweite elektronische Vorrichtung (AP 202):
einen Action-Frame von einer ersten elektronischen Vorrichtung (STA 201) empfängt (1001), wobei der Action-Frame eine Anforderung aufweist, dass jede durch die zweite elektronische Vorrichtung initiierte Downlink-Übertragungsgelegenheit, DL TXOP, mit einem initialen Control-Frame, ICF, beginnt, der eine Dauer der DL TXOP signalisiert,
den ICF, der die DL-TXOP anfordert, an die erste elektronische Vorrichtung (STA 201) sendet (1002), wobei der ICF die Dauer der DL-TXOP signalisiert,
basierend darauf, dass ein Koexistenzereignis während der Dauer der DL-TXOP planmäßig eintreten soll, einen "Clear-to-Send"-Extension-, CTS-EXT- Frame empfängt (1003), der eine Modifikation der DL-TXOP signalisiert, und
nachdem die Modifikation implementiert worden ist, mindestens einen Frame während der DL-TXOP gemäß der Modifikation sendet (1004).

11. Zweite elektronische Vorrichtung (AP 202) nach Anspruch 10, wobei die erste elektronische Vorrichtung (STA 201) und die zweite elektronische Vorrichtung (AP 202) in einem drahtlosen lokalen Netzwerk, WLAN, nach Institute of Electrical and Electronics Engineers, IEEE, 802.11 umfasst sind,
wobei die erste elektronische Vorrichtung (STA 201) eine Non-Access-Point-Station in dem WLAN aufweist und
wobei die zweite elektronische Vorrichtung (AP 202) einen Access-Point in dem WLAN aufweist.

12. Zweite elektronische Vorrichtung (AP 202) nach Anspruch 10 oder 11, wobei die Modifikation ein Reduzieren der Dauer der DL-TXOP beinhaltet, und
wobei der mindestens eine Frame mindestens einen Data-Frame aufweist, der während der reduzierten Dauer der DL-TXOP empfangen wurde.

13. Zweite elektronische Vorrichtung (AP 202) nach einem der Ansprüche 10 bis 12, wobei der mindestens eine Frame einen Acknowledgement-Frame aufweist, der an die erste elektronische Vorrichtung (STA 201) basierend auf dem CTS-EXT-Frame gesendet wurde, und
wobei der CTS-EXT-Frame anzeigt, dass die erste elektronische Vorrichtung (STA 201) unmittelbar nach dem Empfangen des Acknowledgement-Frame in einen Energiespar-, PS-, Modus übergeht.

14. Zweite elektronische Vorrichtung (AP 202) nach einem der Ansprüche 10 bis 13, wobei die mindestens eine Anweisung basierend auf der Modifikation ferner bewirkt, dass die zweite elektronische Vorrichtung (AP 202) während der DL-TXOP ein TXOP-Sharing erlaubt.

15. Zweite elektronische Vorrichtung (AP 202) nach einem der Ansprüche 10 bis 14, wobei die Modifikation das Reduzieren der Dauer der DL-TXOP umfasst und
wobei der CTS-EXT-Frame anzeigt, dass das Koexistenzereignis planmäßig nach der reduzierten Dauer der DL-TXOP stattfinden soll.

## Revendications

1. Premier dispositif électronique (STA 201) comprenant :
un premier émetteur-récepteur (206) ;
au moins un premier processeur (208) ; et
une première mémoire (210) configurée pour stocker au moins une instruction qui, lorsqu'elle est exécutée par ledit au moins un premier processeur (208), amène le premier dispositif électronique (STA 201) à :
transmettre (901) une trame d'action à un deuxième dispositif électronique (AP 202), dans laquelle la trame d'action comprend une demande visant à ce que toute opportunité de transmission en liaison descendante, DL TXOP, initiée par le deuxième dispositif électronique commence par une trame de commande initiale, ICF, qui signale une durée de la DL TXOP,
recevoir (902), en provenance du deuxième dispositif électronique (AP 202), l'ICF demandant la DL TXOP, dans laquelle l'ICF signale la durée de la DL TXOP,
sur la base d'une détermination selon laquelle un événement de coexistence est programmé pour se produire pendant la durée de la DL TXOP, transmettre (903) une trame d'extension d'autorisation d'émettre, CTS-EXT, signalant une modification de la DL TXOP, et
après la mise en œuvre de la modification, recevoir (904) au moins une trame pendant la DL TXOP conformément à la modification.

2. Premier dispositif électronique (STA 201) selon la revendication 1, dans lequel le premier dispositif électronique (STA 201) et le deuxième dispositif électronique (AP 202) sont compris dans un réseau local sans fil, WLAN, IEEE 802.11 de l'Institute of Electrical and Electronics Engineers, IEEE,
dans lequel le premier dispositif électronique (STA 201) comprend une station ne constituant pas un point d'accès dans le WLAN, et
dans lequel le deuxième dispositif électronique (AP 202) comprend un point d'accès dans le WLAN.

3. Premier dispositif électronique (STA 201) selon la revendication 1 ou 2, dans lequel la modification comprend une réduction de la durée de la DL TXOP, et
dans lequel ladite au moins une trame comprend au moins une trame de données reçue pendant la durée réduite de la DL TXOP.

4. Premier dispositif électronique (STA 201) selon l'une quelconque des revendications 1 à 3, dans lequel ladite au moins une trame comprend une trame d'accusé de réception reçue en provenance du deuxième dispositif électronique (AP 202) sur la base de la trame CTS-EXT, et
dans lequel ladite au moins une instruction amène en outre le premier dispositif électronique (STA 201), sur la base de la modification, à entrer dans un mode d'économie d'énergie, PS, immédiatement après la réception de la trame d'accusé de réception.

5. Premier dispositif électronique (STA 201) selon l'une quelconque des revendications 1 à 4, dans lequel, sur la base de la modification, ladite au moins une instruction amène en outre le premier dispositif électronique (STA 201) à initier un partage d'opportunité de transmission, TXOP, pendant la DL TXOP.

6. Premier dispositif électronique (STA 201) selon l'une quelconque des revendications 1 à 5, dans lequel la modification comprend une réduction de la durée de la DL TXOP, et
dans lequel la trame CTS-EXT indique que l'événement de coexistence est programmé pour se produire après la durée réduite de la DL TXOP.

7. Premier dispositif électronique (STA 201) selon l'une quelconque des revendications 1 à 6, dans lequel l'ICF et la trame CTS-EXT sont reçues par un dispositif électronique supplémentaire, et
dans lequel la trame CTS-EXT signale au dispositif électronique supplémentaire de mettre à jour un vecteur d'allocation de réseau, NAV, conformément à la modification.

8. Premier dispositif électronique (STA 201) selon l'une quelconque des revendications 1 à 7, dans lequel ladite au moins une trame comprend une unité de données de protocole de contrôle d'accès au support agrégée, A-MPDU, et
dans lequel, sur la base de la modification, ladite au moins une instruction amène en outre le premier dispositif électronique (STA 201) à transmettre une trame d'accusé de réception indiquant un nombre d'erreurs de sous-trame correspondant à l'A-MPDU.

9. Premier dispositif électronique (STA 201) selon la revendication 8, dans lequel l'ICF comprend au moins une trame parmi une trame de demande d'émission, RTS, et une trame de demande d'émission multi-utilisateur, MU-RTS,
dans lequel la trame d'accusé de réception comprend une trame d'accusé de réception de bloc qui indique un compte d'erreurs de trame, FEC, correspondant à l'A-MPDU.

10. Deuxième dispositif électronique (AP 202) comprenant :
un deuxième émetteur-récepteur (212) ;
au moins un deuxième processeur (214) ; et
une deuxième mémoire (216) configurée pour stocker au moins une instruction qui, lorsqu'elle est exécutée par ledit au moins un deuxième processeur (214), amène le deuxième dispositif électronique (AP 202) à :
recevoir (1001) une trame d'action en provenance d'un premier dispositif électronique (STA 201), dans laquelle la trame d'action comprend une demande visant à ce que toute opportunité de transmission en liaison descendante, DL TXOP, initiée par le deuxième dispositif électronique commence par une trame de commande initiale, ICF, qui signale une durée de la DL TXOP,
transmettre (1002), au premier dispositif électronique (STA 201), l'ICF demandant la DL TXOP, dans laquelle l'ICF signale la durée de la DL TXOP,
sur la base du fait qu'un événement de coexistence est programmé pour se produire pendant la durée de la DL TXOP, recevoir (1003) une trame d'extension d'autorisation d'émettre, CTS-EXT, signalant une modification de la DL TXOP, et
après la mise en œuvre de la modification, transmettre (1004) au moins une trame pendant la DL TXOP conformément à la modification.

11. Deuxième dispositif électronique (AP 202) selon la revendication 10, dans lequel le premier dispositif électronique (STA 201) et le deuxième dispositif électronique (AP 202) sont compris dans un réseau local sans fil, WLAN, IEEE 802.11 de l'Institute of Electrical and Electronics Engineers, IEEE,
dans lequel le premier dispositif électronique (STA 201) comprend une station ne constituant pas un point d'accès dans le WLAN, et
dans lequel le deuxième dispositif électronique (AP 202) comprend un point d'accès dans le WLAN.

12. Deuxième dispositif électronique (AP 202) selon la revendication 10 ou 11, dans lequel la modification comprend une réduction de la durée de la DL TXOP, et
dans lequel ladite au moins une trame comprend au moins une trame de données transmise pendant la durée réduite de la DL TXOP.

13. Deuxième dispositif électronique (AP 202) selon l'une quelconque des revendications 10 à 12, dans lequel ladite au moins une trame comprend une trame d'accusé de réception transmise au premier dispositif électronique (STA 201) sur la base de la trame CTS-EXT, et
dans lequel la trame CTS-EXT indique que le premier dispositif électronique (STA 201) entrera dans un mode d'économie d'énergie, PS, immédiatement après la réception de la trame d'accusé de réception.

14. Deuxième dispositif électronique (AP 202) selon l'une quelconque des revendications 10 à 13, dans lequel, sur la base de la modification, ladite au moins une instruction amène en outre le deuxième dispositif électronique (AP 202) à autoriser un partage d'opportunité de transmission, TXOP, pendant la DL TXOP.

15. Deuxième dispositif électronique (AP 202) selon l'une quelconque des revendications 10 à 14, dans lequel la modification comprend une réduction de la durée de la DL TXOP, et
dans lequel la trame CTS-EXT indique que l'événement de coexistence est programmé pour se produire après la durée réduite de la DL TXOP.
